Europäisches Patentamt

European Patent Office

Office européen des brevets

(19)

(11) Numéro de publication : **0 327 448 B1**

# FASCICULE DE BREVET EUROPEEN

(12)

(45) Date de publication du fascicule du brevet :
07.04.93 Bulletin 93/14

(51) Int. Cl.⁵ : **H01G 9/02, H01G 9/24**

(21) Numéro de dépôt : **89400268.2**

(22) Date de dépôt : **31.01.89**

(54) **Procédé d'imprégnation de condensateurs électrolytiques par des sels de tétracyanoquinodiméthane.**

(30) Priorité : **05.02.88 FR 8801345**

(43) Date de publication de la demande :
**09.08.89 Bulletin 89/32**

(45) Mention de la délivrance du brevet :
**07.04.93 Bulletin 93/14**

(84) Etats contractants désignés :
**DE FR GB IT NL SE**

(56) Documents cités :
**EP-A- 0 224 207**
**GB-A- 2 113 916**

(73) Titulaire : **COMPAGNIE EUROPEENNE DE COMPOSANTS ELECTRONIQUES LCC 50, rue Jean-Pierre Timbaud F-92400 Courbevoie (FR)**

(72) Inventeur : **Poupard, Dominique THOMSON-CSF SCPI 19, avenue de Messine F-75008 Paris (FR)**
Inventeur : **Bureau, Jean-Marc THOMSON-CSF SCPI 19, avenue de Messine F-75008 Paris (FR)**

(74) Mandataire : **Guérin, Michel et al THOMSON-CSF, SCPI, B.P. 329, 50, rue Jean-Pierre Timbaud F-92402 Courbevoie Cédexc (FR)**

Jouve, 18, rue Saint-Denis, 75001 PARIS

## Description

La présente invention concerne la fabrication de condensateurs électrolytiques à électrolyte organique solide et plus particulièrement ceux où le métal de base est l'aluminium.

Les condensateurs électrolytiques sont surtout utilisés à cause de leur grande capacité dans un volume réduit. Actuellement, trois familles de condensateurs électrolytiques sont présents sur le marché. On trouve des condensateurs à l'aluminium et à électrolyte liquide : l'anode est en aluminium et la cathode est un liquide électrolytique. On trouve aussi des condensateurs au tantale et à électrolyte solide : l'anode est au tantale et la cathode est un électrolyte semiconducteur solide. On trouve enfin des condensateurs à l'aluminium et à électrolyte solide : l'anode est en aluminium et la cathode est un électrolyte semiconducteur solide.

La dernière famille citée a connu récemment un développement certain. La société Philips a développé plusieurs gammes de condensateurs électrolytiques à l'aluminium et à électrolyte solide. L'anode est réalisée à partir d'une feuille enroulée ou pliée. Le procédé de fabrication à partir d'une anode en feuille comprend les étapes suivantes :
- découpe de la feuille d'aluminium,
- gravure de la feuille,
- pliage de la feuille d'aluminium gravée dans le cas de condensateurs radiaux ou enroulement dans le cas de condensateurs axiaux,
- anodisation de la feuille pour former une mince couche d'alumine,
- formation de l'électrolyte solide (dioxyde de manganèse) par imprégnation d'une solution de nitrate de manganèse II suivie d'une pyrolyse,
- mise en place d'un contact de cathode.

Le procédé de fabrication de ces condensateurs est assez compliqué. Il comprend une opération de pliage individualisé dans le cas des condensateurs radiaux ou d'enroulement individualisé dans le cas de condensateurs axiaux. L'étape de formation de l'électrolyte solide est la plus délicate. Plusieurs cycles de pyrolyse sont nécessaires (quatre en principe) et ces cycles doivent se dérouler dans des conditions de température et de durée bien déterminées. Ce sont des opérations très difficiles à maîtriser. En effet, le produit de base utilisé est une solution de nitrate de manganèse très agressive. La conversion en dioxyde de manganèse doit être très rapide. Une opération de post-formation est nécessaire pour réparer la couche endommagée par le dioxyde d'azote résultant de la pyrolyse.

On connaît, par le brevet français FR 2 583 216, un procédé de fabrication de condensateurs électrolytiques comprenant une étape de bobinage de feuilles anodique et cathodique et d'un support d'électrolyte sur une roue de grand diamètre. Ce procédé a l'avantage de la simplicité procurée par la méthode de bobinage. Il permet d'obtenir des composants du type CMS (composants pour le montage en surface). L'électrolyte solide utilisé est de préférence le dioxyde de manganèse mais la possibilité d'utiliser un électrolyte organique est également mentionnée. On peut, par exemple, employer les sels du 7, 7, 8, 8 - tétracyanoquinodiméthane plus communément désigné sous l'appellation TCNQ. Théoriquement, ces sels sont très intéressants, mais leur utilisation en tant qu'électrolyte pour condensateurs pose beaucoup de problèmes de mise en oeuvre.

Pour remédier à cet inconvénient, l'invention propose un nouveau procédé permettant l'imprégnation des anodes oxydées des condensateurs par un sel de TCNQ. La mise en oeuvre de ce procédé se fait par voie électrolytique.

L'invention a donc pour objet un procédé d'imprégnation de condensateurs électrolytiques par un sel de tétracyanoquinodiméthane (TCNQ), caractérisé en ce qu'il consiste à introduire ledit sel dans chaque condensateur par voie électrolytique à partir d'une solution constituée d'un solvant dans lequel on a dissous du TCNQ et contenant un électrolyte support, le cation de l'électrolyte support et le TCNQ dissous conduisant, après dissociation électrolytique, audit sel de TCNQ.

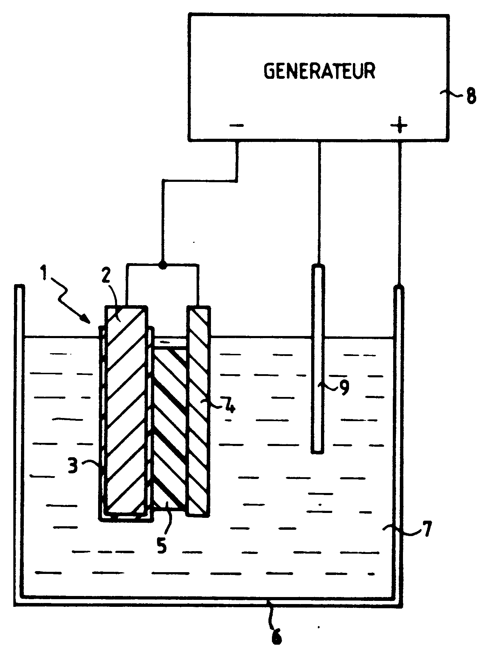

L'invention sera mieux comprise et d'autres avantages apparaîtront grâce à la description qui va suivre, donnée à titre non limitatif, accompagnée de la figure annexée qui illustre le procédé d'imprégnation par électrolyse.

Les sels de 7, 7, 8, 8 - tétracyanoquinodiméthane (en abrégé TCNQ) et en particulier le N-n butylisoquinolinium de TCNQ ont l'avantage de présenter une bonne conductibilité électrique. Cette valeur de conductibilité est compatible avec une utilisation dans la fabrication des condensateurs électrolytiques.

Le N-n butylisoquinolinium de TCNQ est normalement formé à l'état de poudre cristalline. Sa fixation sur les métaux filmogènes et l'aluminium en particulier n'est pas facile. Les études concernant les diverses techniques d'adhérence des sels de TCNQ sur ce type de support ont montré que la fixation d'un sel de TCNQ, sur un métal filmogène ayant une surface anodisée, par contact du métal avec le sel à l'état fondu, suivi de sa solidification, conduit à un condensateur à électrolyte solide possédant d'excellentes qualités. Par ce procédé, il est nécessaire que le sel de TCNQ liquéfié soit refroidi assez rapidement pour provoquer sa solidification. En effet, le chauffage prolongé du sel provoque sa décomposition. Ce procédé s'avère délicat à mettre en oeuvre en laboratoire. Il le devient d'autant plus pour des applications industrielles lorsqu'il s'agit de maîtriser un temps de chauffe de façon reproductible.

Parmi les propriétés des sels de TCNQ mentionnées dans la littérature (voir en particulier le "Journal of the American Chemical Society", 1962, pages 3374 - 3387), on peut noter que les sels complexes de TCNQ de formule générale $M^{n+} (TCNQ^-)_n (TCNQ)_m$, où M représente le cation organique, possèdent des caractéristiques polarographiques intéressantes. Dans l'acétonitrile, en milieu perchlorate de lithium 0,1M, le polarogramme des sels complexes de TCNQ sur platine se compose de deux vagues correspondant aux courbes polarographiques du sel neutre TCNQ et du radical anion $TCNQ^-$. Elles sont reliées aux demi-équations redox :

$$TCNQ^{\cdot -} \underset{+e^-}{\overset{-e^-}{\rightleftarrows}} TCNQ \quad (1)$$

$$TCNQ^{\cdot -} \xrightarrow{+e^-} TCNQ^{=} \quad (2)$$

auxquelles correspondent les tensions de demi-vagues $e_{1/2}(1)$ et $e_{1/2}(2)$, c'est-à-dire respectivement 0,127 V et - 0,291 V par rapport à une électrode de référence au calomel saturé en chlorure de potassium dans l'eau.

Selon l'invention, le procédé d'imprégnation est réalisé par voie électrolytique. A titre d'exemple non limitatif, la suite de la description portera sur l'imprégnation de condensateurs à l'aluminium par le N-n butylisoquinolinium de TCNQ. Le système (1) étant réversible sur une électrode d'aluminium, le procédé sera mené de la façon suivante.

Pour obtenir la solution électrolytique appropriée, on dissout, par exemple, du TCNQ dans de l'acétonitrile contenant un électrolyte support dont le cation est le N-n butylisoquinolinium$^+$, par exemple l'hexafluorophosphate de N-n butylisoquinolinium.

Les éléments à imprégner peuvent se présenter sous différentes formes. Il peut s'agir de condensateurs du type empilé ou du type bobiné, avec ou non interposition d'un support d'électrolyte tel que le papier. Pour réaliser l'imprégnation d'un condensateur, les parties constituant l'anode ou les parties constituant le contact de cathode ou encore la totalité de ces parties sont reliées électriquement au pôle négatif d'un générateur de tension.

La figure annexée illustre le procédé d'imprégnation selon l'invention. L'élément capacitif 1 à imprégner a été représenté de la manière la plus simple possible. Il comprend une anode 2 en aluminium recouverte de sa couche d'oxyde 3, un contact de cathode 4 et une feuille de papier 5 enserrée entre l'anode oxydée et le contact de cathode en aluminium. L'élément capacitif est plongé dans une cuve d'électrolyse 6 remplie d'une solution électrolytique 7. L'anode 2 comprend une partie non oxydée qui émerge de l'électrolyte. On fait en sorte que la partie non oxydée de l'anode ne soit pas en contact avec l'électrolyte pour éviter qu'elle ne soit imprégnée. L'anode et le contact de cathode sont reliés électriquement au pôle négatif du générateur de tension 8. Si la cuve 6 est réalisée en un matériau conducteur, elle peut constituer une électrode et être reliée au pôle positif du générateur 8. Le dispositif peut comprendre encore une électrode de référence 9 au calomel et reliée au générateur.

La solution électrolytique 7 étant celle décrite plus haut (constituée par de l'acétonitrile dans lequel on a dissous du TCNQ et contenant un électrolyte support dont le cation est le N-n butylisoquinolinium $^+$), l'électrolyse permet d'assurer la réduction cathodique du TCNQ :

$$TCNQ + e^- \rightarrow TCNQ^-$$

Le radical anion $TCNQ^-$ ainsi obtenu se combine avec le cation de l'électrolyte support et le TCNQ neutre pour former le sel en question.

Le sel ainsi obtenu, peu soluble dans l'acétonitrile, enrobera donc l'élément capacitif 1. On peut faire en sorte que le contact de cathode 4 soit également enrobé ce qui contribuera à améliorer son adhérence à l'élément capacitif. Une fois la réaction électrochimique réalisée, le condensateur est alors lavé, séché puis encapsulé. Une étape ultérieure de chauffage peut être effectuée pour fondre le sel afin d'en améliorer l'imprégnation.

Il est à noter que, dans ce procédé, la cathode qui fournit des électrons par électrolyse au TCNQ joue le rôle de l'iodure de N-n butylisoquinolinium qui est le réducteur dans la synthèse chimique classique.

Il entre dans le cadre de l'invention d'utiliser d'autres solvants que l'acétonitrile. Ils seront choisis en fonction de leur domaine d'électroactivité et du sel de TCNQ choisi.

Il entre également dans le cadre de l'invention d'appliquer ce procédé à d'autres métaux de base que l'aluminium, par exemple au tantale.

## Revendications

1. Procédé d'imprégnation de condensateurs électrolytiques par un sel de tétracyanoquinodiméthane (TCNQ), caractérisé en ce qu'il consiste à introduire ledit sel dans chaque condensateur (1) par voie électrolytique à partir d'une solution (7) constituée d'un solvant dans lequel on a dissous du TCNQ et contenant un électrolyte support, le cation de l'électrolyte support et le TCNQ dissous conduisant, après dissociation électrolytique, audit sel de TCNQ.

2. Procédé selon la revendication 1, caractérisé en ce que ledit condensateur possède une anode (2) en aluminium.

3. Procédé selon l'une des revendications 1 ou 2, caractérisé en ce que le solvant est de l'acétonitrile.

4. Procédé selon l'une quelconque des revendications 1 à 3, caractérisé en ce que le cation de l'électrolyte support est le N-n butylisoquinolinium.

5. Procédé selon la revendication 4, caractérisé en ce que l'électrolyte support est l'hexafluorophosphate de N-n butylisoquinolinium.

6. Procédé selon l'une quelconque des revendications 1 à 5, caractérisé en ce que les condensateurs électrolytiques (1) à imprégner étant équipés de leurs contacts de cathodes (4), l'anode (2) et la cathode (4) d'un même condensateur (1) sont reliées électriquement pendant l'opération d'imprégnation.

## Claims

1. Process for impregnating electrolytic capacitors with a tetracyanoquinodimethane (TCNQ) salt, characterised in that it consists in introducing the said salt into each capacitor (1) by an electrolytic route by starting from a solution (7) consisting of a solvent in which TCNQ has been dissolved and containing a support electrolyte, the cation of the support electrolyte and the dissolved TCNQ producing, after electrolytic dissociation, the said TCNQ salt.

2. Process according to Claim 1, characterised in that the said capacitor has an aluminium anode (2).

3. Process according to either of Claims 1 and 2, characterised in that the solvent is acetonitrile.

4. Process according to any one of Claims 1 to 3, characterised in that the cation of the support electrolyte is N-n-butylisoquinolinium.

5. Process according to Claim 4, characterised in that the support electrolyte is N-n-butylisoquinolinium hexafluorophosphate.

6. Process according to any one of Claims 1 to 5, characterised in that the electrolytic capacitors (1) to be impregnated being equipped with their cathode contacts (4), the anode (2) and the cathode (4) of the same single capacitor (1) are connected electrically during the impregnating operation.

## Patentansprüche

1. Imprägnierverfahren für Elektrolytkondensatoren mit einem Salz von Tetracyanoquinodimethan (TCNQ), dadurch gekennzeichnet, daß das Salz in jeden Kondensator (1) auf elektrolytischem Weg ausgehend von einer Lösung (7) eingebracht wird, die aus einem Lösungsmittel besteht, in dem TCNQ gelöst wurde, und die einen Trägerelektrolyten enthält, wobei das Kation des Trägerelektrolyten und das gelöste TCNQ nach der elektrolytischen Zersetzung zu dem Salz des TCNQ führt.

2. Verfahren nach Anspruch 1, dadurch gekennzeichnet, daß der Kondensator eine Aluminiumanode (2) besitzt.

3. Verfahren nach einem der Ansprüche 1 oder 2, dadurch gekennzeichnet, daß das Lösungsmittel Acetonitril ist.

4. Verfahren nach einem beliebigen der Ansprüche 1 bis 3, dadurch gekennzeichnet, daß das Kation des Trägerelektrolyten N-n Butylisoquinolinium ist.

5. Verfahren nach Anspruch 4, dadurch gekennzeichnet, daß der Trägerelektrolyt Hexafluorphosphat von N-n Butylisoquinolinium ist.

6. Verfahren nach einem beliebigen der Ansprüche 1 bis 5, dadurch gekennzeichnet, daß bei zu imprägnierenden Elektrolytkondensatoren (1), die mit ihrem Kathodenkontakten (4) versehen sind, die Anode (2) und die Kathode (4) eines Kondensators (1) während des Imprägnierens elektrisch miteinander verbunden sind.

GENERATEUR

8

−  +

1

2

3

4

5

9

7

6